# EUROPEAN PATENT APPLICATION

(11) **EP 4 617 990 A1**
(43) Date of publication of application: **17.09.2025**
(21) Application number: 24162792.6
(22) Date of filing: 11.03.2024
(51) Int. Cl.: G06Q 40/02, G06N 3/0442, G06N 3/045

(54) **METHOD OF PREDICTING A LEVEL OF A TIME-VARYING RESERVE**

(71) Applicant: Mastercard International Incorporated, Purchase, NY 10577 (US)
(72) Inventor: SINGH, Alok, H 122011 Gurgaon (IN); SIDDHARD, Yerramsetty L N, AP 522501 Guntur (IN); CHAURASIYA, Deepak, UP 273001 Gorakhpur (IN); CONWAY, James, Dublin, D12 CH63 (IE); TANEJA, Mohit, Waterford, X91 C521 (IE); GROAT, Richard Joseph, Buckinghamshire, HP21 7AN (GB); FLINTER, Stephen Patrick, Dublin, D6W DR68 (IE); KOTHALE, Nitish, Dublin, D01 PX81 (IE); WILD, David Ian, Berkshire, RG20 70Z (GB); GRAYSON, Kelly, Mount Kisco, 10549 (US)
(74) Representative: Keltie LLP

(57) **Abstract**

There is described a computer implemented method for predicting a level of a time-varying reserve stored by a financial institution. The method comprises: obtaining a raw time-series transaction data set comprising a plurality of pieces of transaction data, each piece of transaction data corresponding to a transaction carried out by the financial institution over a previous time period; generating an enhanced time-series transaction data set by associating a plurality of time-series variables with each piece of transaction data in the raw transaction data set; providing the enhanced transaction data set to a predictive model trained using a machine learning method, wherein the predictive model comprises at least two layers, a first time-series layer configured to capture time-series nature of the enhanced transaction data set and a second dense layer configured to map outputs from the first time-series layer to predicted time-series data over a future time period; and receiving, from the predictive model as output, a prediction of the level of the time-varying reserve for the future time period. A computer implemented method for training the predictive model is also described.

## Description

### Field of Disclosure

The present disclosure relates to a computer-implemented method for predicting a level of a time-varying reserve stored by a financial institution, and more particularly for predicting a level of liquidity of the financial institution. Aspects of the disclosure relate to a computing system, and to a method of training a model, for making such predictions.

### Background to Disclosure

Liquidity - the measure of the amount of liquid assets that financial institutions (such as banks) have available to meet short term business and financial obligations - is difficult and complex to manage, particularly in view of the evolving regulatory requirements and increases in payment uncertainty resulting from changes in payment technology and practices.

The number of electronic transactions / transfers is ever increasing and a significant number of these are made through payment systems (such as payment rails and payment infrastructure). Consumer and business (and governmental) adoption of real-time payment mechanisms for standard payment types, as well as for new and/or unusual situations (e.g., bill payment, gig worker wages) continues to grow. Moreover, the increased adoption of open banking has resulted in the introduction of many third-party providers to the traditional payment ecosystem. As a result, financial institutions may find it difficult to accurately predict customers behaviours in any given time interval, and hence be blind to, or at the least find it very difficult to, predict what their future liquidity needs are likely to be.

There is hence an inherent risk that a particular financial institution may not be able to settle their debts because their liquidity reserves are insufficient to cover the net value of transactions that have occurred over a particular period. This can cause significant risk, uncertainty and disruption to the financial institution, as well as through the payment system as a whole. Global requirements therefore make it essential to measure and anticipate intraday liquidity accurately; moreover, short-term borrowing to deal with unexpected shortfalls at settlement comes at increased cost.

It is against the above background that the present disclosure is set.

### Summary of Disclosure

According to an aspect of the present disclosure, there is described a computer implemented method for predicting a level of a time-varying reserve stored by a financial institution. The method comprises obtaining a raw time-series transaction data set comprising a plurality of pieces of transaction data, each piece of transaction data corresponding to a transaction carried out by the financial institution over a previous time period. The method further comprises generating an enhanced time-series transaction data set by associating a plurality of time-series variables with each piece of transaction data in the raw transaction data set. The method further comprises providing the enhanced transaction data set to a predictive model trained using a machine learning method; and receiving, from the predictive model as output, a prediction of the level of the time-varying reserve for the future time period. The predictive model comprises at least two layers, a first time-series layer configured to capture time-series nature of the enhanced transaction data set and a second dense layer configured to map outputs from the first time-series layer to predicted time-series data over a future time period.

Advantageously, the above-described method and particularly utilising the combination of the two layers of the predictive model, allows for the time-varying nature of the transaction data to be taken into account, since time-series data can be processed as inputs by the predictive model, and the predictive model is also able to output time-series data when making its predictions. Predictions of the time-varying reserve can be obtained for extended time periods in the future, and the variations in the transaction data over extended periods in the past can be taken into account when making those predictions. Moreover, the use of time-series variables to enhance the transaction data allows additional factors or parameters that are associated with the transaction data to be taken into account by the predictive model. The past behaviour of the transaction data as a result of these factors or parameters can be analysed, and mapped as appropriate to the corresponding expected behaviour of the time-varying reserve in the future.

In some instances, the time-varying reserve is liquidity. Optionally, the method further comprises aggregating the raw transaction data set over predefined time intervals, and generating the enhanced time-series transaction data set using the aggregated transaction data set and the plurality of time-series variables.

The use of aggregated data sets as input to the predictive model allows fluctuations in the data to be smoothed out and the noise in the aggregated data can be minimised, such that true underlying (time-dependent) trends can be captured without distraction from transient fluctuations. More accurate predictions can therefore be obtained by the predictive model as a result of minimising noise in the input data. Moreover, the reduction in data points achieved by aggregation leads to a condensed data set, which improves the computational efficiency of the system, and reduces the memory and storage requirements.

The time intervals selected for aggregation can be varied and can be selected depending on the length of the previous time period, and/or the length of the future time period. In some instances, the predefined time intervals are 10-minute time intervals. The future time period may also correspond to a 14-day time period. In some instances, the length of the future time period corresponds substantially to the length of the previous time period. In such instances, the previous time period may also correspond to a 14-day time period. Alternatively, the predefined time intervals may be 15-minute, 30-minute, or 60-minute time intervals. The future and/or previous time periods may correspond to 1 hour, 1 day, 7-day or 30-day time intervals.

In some cases, the previous time period is variable, and the method further comprises selecting the previous time period based on the future time period. More particularly, the length of the previous time period may be dynamically selected to be at least as long as, but typically substantially much longer than, the length of the future time period over which it is desired that the predictions will be made. Additionally or alternatively, the end of the previous time period may be selected to be temporally adjacent to the beginning of the future time period. For example, if predictions for the next 14 days are desired, the previous time period may be selected to encompass at least the previous 14 days immediately prior to the future time period.

Optionally, the method further comprises: determining the actual amount of the reserve required by the financial institution for the future time period; and comparing the output prediction of the level of the reserve for the future time period with the determined actual amount of reserve required. The method may further comprise providing the results of the comparison as feedback input to the model to improve predictive capabilities of the model. This approach allows for evaluation and benchmarking of the results provided by the predictive model against actual (real-world) data, once that future time period has passed. The predictive model can therefore to be retrospectively tuned and improved to optimise its predictive capabilities for future predictions.

In some instances, the method may further comprise providing, to the predictive model, a set of scaling data corresponding to transactions carried out over a dynamically variable scaling time period that includes at least the previous time period. Optionally, the scaling time period may be selected such that the scaling time period is temporally immediately prior to the future time period. The end of the scaling time period may correspond to the start of the future time period.

Dynamic scaling updates various statistics based on a recent data window, making it highly adaptive to recent trends and changes in the data. This is particularly useful in relation to financial data (and especially liquidity), which can be highly volatile with frequent shifts in patterns. The use of dynamic scaling enables an accurate forecast to be generated using the most relevant past information - for example, to remain adaptive to any shifts in the financial world and to consider recent trends - whilst still ensuring that the predictive model is not substantively affected by *anomalous* real-world event driven events.

According to another aspect of the disclosure, there is provided a computer implemented method for training a predictive model, using a machine learning process, to predict a level of a time-varying reserve stored by a financial institution. The method comprises: obtaining a raw time-series transaction data set comprising a plurality of pieces of transaction data, each piece of transaction data corresponding to a transaction carried out by the financial institution in a previous time period; generating an enhanced time-series transaction data set by associating a plurality of time-series variables with each piece of transaction data in the raw transaction data set; and training the predictive model. The predictive model comprises at least two layers, a first time-series layer configured to capture time-series nature of the enhanced transaction data set and a second dense layer configured to map outputs from the first time-series layer to predicted time-series data over a future time period. The training of the predictive model comprises: providing a first subset of the enhanced transaction data set as training data to the predictive model; receiving, from the predictive model as output, a first prediction of the level of the reserve for a future time period; validating the predictive model by providing a second subset of the enhanced transaction data set as validation data to the predictive model and receiving a second prediction of the level of the reserve for the future time period; and tuning one or more parameters of the predictive model based on the first and second predictions.

Optionally, the method further comprises benchmarking an output prediction level of the reserve against an actual amount of reserve required for the future time period; and using the results of the benchmarking as feedback input to the predictive model. The method may further comprise training the predictive model by tuning the one or more parameters of the predictive model based on the feedback input.

As noted above, by comparing the prediction results for the future time period against the actual data that is observed during that future time period, this ensures that the training of the predictive model can be evaluated and benchmarked against real-world data. The predictive model can therefore be trained in an optimal manner to more accurately reflect the real-world effects in its output predictions.

In some instances, the method may further comprise providing, to the predictive model, a set of scaling and normalization data corresponding to transactions carried out over a scaling time period that includes at least the previous time period. Optionally, a length of the scaling time period corresponds to a length of the future time period, and/or a length of the previous time period.

Dynamic scaling ensures that the model is always trained on data that reflects the most recent distribution by continuously updating the statistical properties, enhancing its relevance and accuracy in relation to predicting future trends.

According to another aspect of the disclosure, there is provided a computing system for predicting a level of a time-varying reserve stored by a financial institution. The computing system comprises: an input; at least one processor programmed with instructions; and an output. The input is configured to receive a raw time-series transaction data set comprising a plurality of pieces of transaction data, each piece of transaction data corresponding to a transaction carried out by the financial institution over a previous time period. The instructions, when implemented, cause the processor to: generate an enhanced time-series transaction data set by associating a plurality of time-series variables with each piece of transaction data in the raw transaction data set; provide the enhanced transaction data to a predictive model trained using a machine learning method; and receive, from the predictive model as output, a prediction of the level of the reserve for a future time period. The output is configured to output the prediction of the level of the reserve. The predictive model comprises at least two layers, a first time-series layer configured to capture time-series nature of the enhanced transaction data and a second dense layer configured to map outputs from the first time-series layer to predicted time-series data over a future time period.

It will be appreciated that similar benefits and advantages will be associated with any systems and devices implementing these methods as were described previously in association with the methods.

In addition, corresponding additional (optional) features set out in respect of the above-described methods would also be equally applicable in respect of those respective systems and devices. Some such features, applicable to the methods, as well as the respective systems and/or device, are set out below.

Optionally, the first time-series layer of the predictive model is a Long Short-Term Memory LSTM layer. The use of this layer enables the time-series nature of the input transaction data to be taken into account by the predictive model.

Optionally, the predictive model further comprises a third, reshaping, layer configured to process the data output from the second layer into a format compatible for further processing and evaluation. This allows the predictive model to utilise all of the beneficial effects achieved by the first and second layers, whilst still enabling the results that are output to be relatively easily evaluated.

In some instances, the plurality of time-series variables comprises at least one cyclic transformation of one or more time-related features associated with each of the pieces of transaction data in the raw transaction data set.

Optionally, the at least one cyclic transformation comprises a sine transformation or a cosine transformation. Additionally or alternatively, the one or more time-related features are selected from a group comprising: a time of day at which the transaction was carried out; a day of the week on which the transaction was carried out; and a date on which the transaction was carried out. In some instances, the plurality of time-series variables comprises at least one representation of a cyclically occurring event, the event being selected from the group comprising: occurrence of a holiday; occurrence of a weekend; or occurrence of month-end. Such variables are particularly useful when the reserve being predicted is liquidity, since there is a change in the volume and nature of transactions that occurs on a cyclically variable basis.

When cyclic variables are included in the input data, the effects that they have on the transaction data over the previous time period can be mapped to the corresponding times in the future time period, and hence taken into account when making predictions of the level of the time-varying reserve. It is beneficial for the predictive model to be able to take into account the effects of variable events (particularly those where the events vary on a cyclic or otherwise well-defined timescale) when making its predictions as it ensures that the predictions more accurately reflect the conditions that would apply during the future time period.

Additionally or alternatively, the plurality of time-series variables may comprise one or more metrics relating to the level of the time-varying reserve, and/or one or more indicators associated with the proximity of the transaction date to month-end. Such variables are particularly useful when the reserve being predicted is liquidity, since there is a change in the volume and nature of transactions that occurs near the end of the month.

Within the scope of this application, it is expressly intended that the various aspects, embodiments, examples or alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Description of Specific Embodiments

Specific embodiments of the disclosure are now described, by way of example, with reference to the accompanying drawings, of which:
**Figure 1** shows a flow chart illustrating a general approach adopted by elements of the disclosure in addressing technical problems associated with predicting levels of a time-varying reserve;
**Figure 2** shows schematically a distributed transaction architecture using a four-party model;
**Figure 3** shows schematically an example computing system that can be utilised to implement aspects of the present disclosure;
**Figure 4** shows a flow chart describing a method for using a predictive model implemented by a trained neural network for predicting liquidity according to an aspect of the disclosure;
**Figures 5a** **and** **5b** show examples of (a) raw payment data received from payment sources, and (b) enhanced payment data input to the predictive model, respectively;
**Figures 6a and 6b** show example results that may be obtained when implementing the method of Figure 4;
**Figures 7a and 7b** provide information regarding a neural network architecture that can be used to implement the predictive model according to aspects of the disclosure; and
**Figure 8** shows a flow chart describing a method for training an example neural network to implement a predictive model according to aspects of the disclosure.

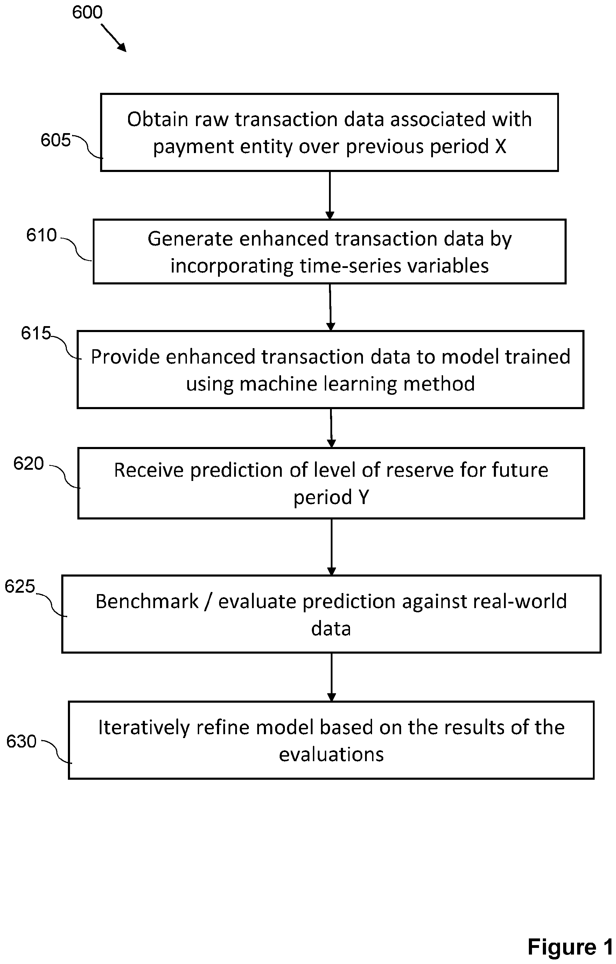

In general terms, the problem addressed by the disclosure and the solution employed by embodiments of the disclosure is illustrated in **Figure 1****.**

The solution shown therein involves a method 600 of predicting a level of a time-variable or time-varying reserve or asset for a financial institution, for a given period in the future, using a predictive model trained using machine learning. The method 600 involves obtaining in Step 605 a raw transaction data set - comprising a plurality of pieces of transaction data - associated with transactions that have been carried out by the financial institution over a first (previous) period X. It will be appreciated that this raw transaction data set effectively corresponds to time-series data since it reflects the transaction history of that financial institution over the period X. A set of enhanced time-series transaction data is then generated in Step 610 by incorporating or associating a plurality of time-series variables or features with each piece of the transaction data.

The enhanced time-series transaction data is then provided in Step 615 as input to the model trained using machine learning. The model comprises two layers - a first (time-series) layer configured to capture the time-series nature of the input enhanced transaction data; and a second (dense) layer configured to map the outputs from the first layer to future time-series steps over a second (future) period Y. The model is configured to output in Step 620 a prediction of the level of reserve or asset that the financial institution will require over the future period Y.

Thereafter, as that future period Y passes, the method involves benchmarking or evaluating in Step 625 the predictions that have been obtained previously against real-world data - namely, against the level of the reserve or asset that is actually required for use by the financial institution over that same period Y. The results of the benchmarking / evaluation are then subsequently used as feedback to the model in Step 630 to iteratively refine , tune and train the model to improve the predictions that are output thereafter.

A primary reserve or asset that would benefit from use of this method is liquidity; however, any other form of time-variable transaction asset would also potentially benefit from implementation of this method.

Some specific implementations will be described in more detail in the context of a transaction scheme. A suitable transaction scheme and infrastructure will first be described in more detail in order to provide a basis for understanding the processing improvements that are provided in this context.

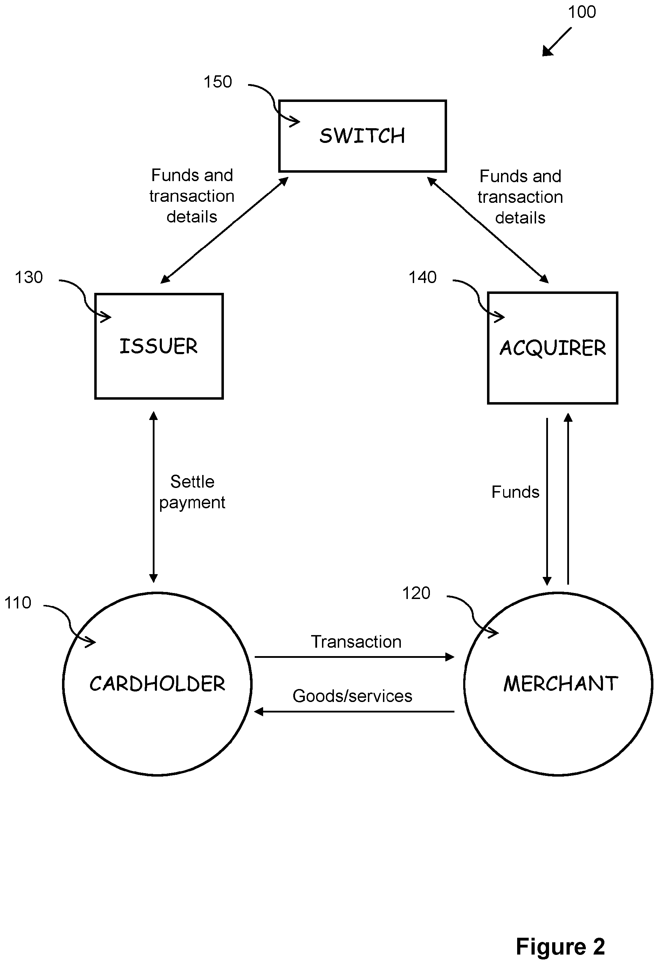

**Figure 2** is a block diagram of a typical four-party model for a payment transaction scheme. The diagram illustrates the entities present in the model and the interactions occurring between entities operating in a card scheme. Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120. The model also comprises a central switch 150 - interactions between the issuer 130 and the acquirer 140 are routed via the switch 150. The switch 150 enables a merchant 120 associated with one bank acquirer 140 to accept payment transactions from a cardholder 110 associated with a different bank issuer 130.

A typical transaction between the entities in the four-party model can be divided into two main stages: authorisation and settlement. The cardholder 110 initiates a purchase of an asset (goods or services) from the merchant 120 using their card. Details of the card and the transaction are sent to the issuer 130 via the acquirer 140 and the switch 150 to authorise the transaction. The cardholder 110 may have provided verification information in the transaction, and in some circumstances may be required to undergo an additional verification process to verify their identity (such as 3-D Secure in the case of a remote transaction). Once the additional verification process is complete the transaction is authorized.

On completion of the transaction between the cardholder 110 and the merchant 120, the transaction details are submitted by the merchant 120 to the acquirer 140 for settlement. The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

Current systems for managing and predicting the level of reserves / assets tend to fall short when it comes to predicting liquidity requirements, and maintaining optimal account balances, for financial institutions such as the issuer 130 and acquirer 140 mentioned above. For example, current global treasurers tend to have to use rudimentary tools to get insight into their liquidity position. Such tools are, however, unable to cope with managing real-time liquidity risk due to limitations in prediction models and a lack of real-time data analysis.

In some cases, financial institutions attempt to manage this difficulty in liquidity prediction by implementing a large 'liquidity buffer' (or reserve), also referred to as a Minimum Net Sender Cap (MNSC), which is significantly larger than the amount of liquidity that would practically be required by the financial institution under most circumstances. However, such liquidity buffers tie up liquid assets that then cannot be utilised for other purposes (even if they are not ultimately needed for liquidity purposes).

The Applicant has recognised that there are potential disadvantages of the current systems (including those noted above), and has developed a new method of predicting liquidity requirements substantially in real-time that allows the liquidity buffer that should be maintained by the financial institutions to be defined in a responsive and optimal manner. In more detail, the Applicant aims to use substantially real-time payment data to derive a PMFL (Predicted Minimum Funding Level) for a given financial institution that can in turn be used to allow the liquidity buffer to be set at an optimal level for that financial institution. As part of this process, the Applicant has developed and trained an artificial intelligence system - specifically, a neural network architecture - that is used to apply a liquidity prediction model to incoming real-time payment data in order to generate the expected PMFL.

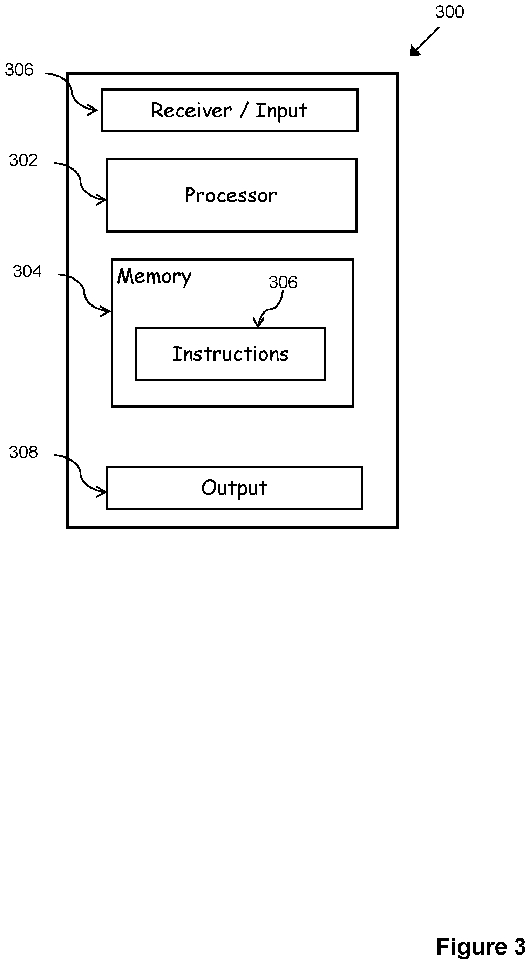

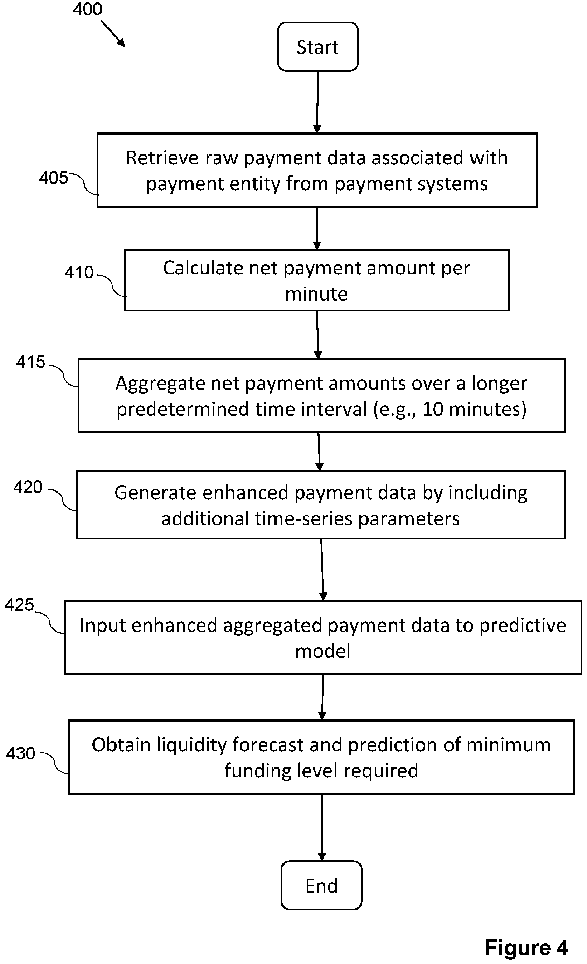

A detailed discussion of a computing system 300 and a computer-implemented method 400 by which the PMFL can be determined and used to optimise the liquidity buffer will now be provided with reference to **Figures 3** **and** **4**.

As shown in **Figure 3**, the computing system 300 comprises at least one processor 302 and at least one operatively coupled memory 304. The memory 304 holds instruction data (e.g., such as compiled code) representing set(s) of instructions 306. The processor 302 may be configured to communicate with the memory 304 and to execute the set of instructions 306. The set of instructions 306, when executed by the processor 302, may cause the processor 302 to perform any of the methods herein, such as the method 400 or the method 900 described below.

The processor (e.g., processing circuitry or logic) 302 may be any type of processor, such as, for example, a central processing unit (CPU), a Graphics Processing Unit (GPU), a Neural Processing Unit (NPU), or any other type of processing unit. The processor 302 may comprise one or more sub-processors, processing units, multi-core processors or modules that are configured to work together in a distributed manner to control the computing system in the manner described herein. The memory 304 can be configured to store program code or instructions that can be executed by the processor 302 to perform the functionality described herein.

The computing system 300 further comprises at least one receiver or input 306 that is configured to receive raw payment data from one or more payment sources within a payment network. For example, these payment sources may correspond to payment systems such as those associated with one of the entities in the four-party model described above - for example, with the cardholder 110 or merchant 120; or with their corresponding financial institutions - the issuer 130 or acquirer 140. The method by which the raw payment data is obtained will, to a certain extent, be dependent upon the underlying payment system handling the transactional activities that are associated with the payment data. Such payment systems include, but are not limited to, the following examples: payment gateway systems, electronic funds transfer platforms, online banking portals or gateways, credit card processing systems. In some instances, the data may be obtained from these payment systems using an API (Application Programming Interface) directly connected to the payment system. For example, the raw payment data may be 'pulled' by the computing system 300 via integration with the payment system API (e.g., via a Kafka API). In other instances, the data may be obtained via leveraging existing open banking and/or the SWIFT protocols and communications systems.

The computing system 300 further comprises at least one output 308 that is configured to output the result of the liquidity prediction (forecasting) process. This output 308 may comprise or be in communication with a display that can display the desired data to a requesting user. In some instances, as will be described in more detail subsequently, the output 308 may be configured to provide the liquidity prediction output to an end user.

As shown in **Figure 4**, the method 400 begins in Step 405 where payment (transaction) data regarding payment transactions being made by the financial institution is received by the computing system 300, via the receiver 306, from the one or more payment sources. This incoming data will be referred to hereafter as 'raw' (or source) payment data since it corresponds to data that has not yet been substantively processed or altered by the current computing system (beyond the normal amount of processing and/or reformatting that might be expected upon receipt of the payment data from its source).

The raw payment data is then processed in Steps 410 to 420 to generate enhanced payment data that can be provided as inputs for a liquidity prediction model (hereafter referred to, for simplicity, as the 'predictive model').

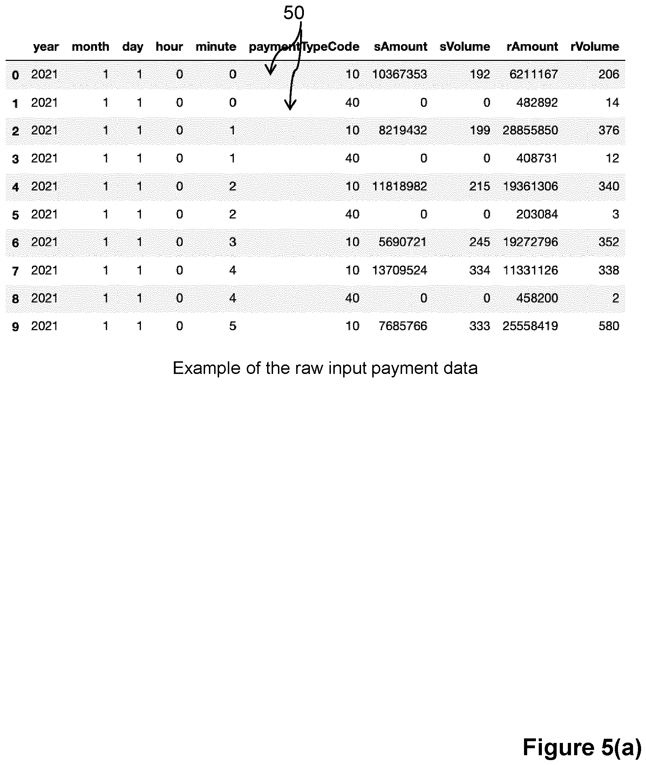

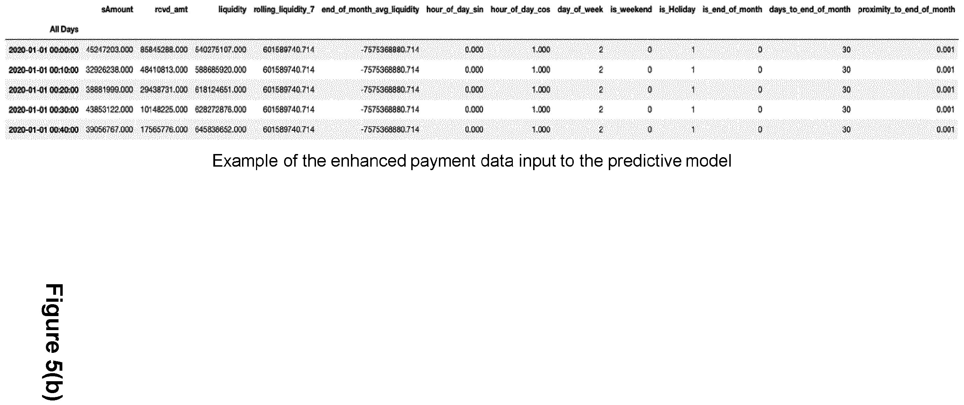

An example of the format in which the raw payment data may be received is shown in the table in **Figure 5a**, whilst an example of the corresponding enhanced payment data that is generated using the raw payment data for input to the predictive model is shown in the table in **Figure 5b**. In the table in Figure 5a, each row 50 represents an input payment data entry made by the financial institution, with sequential rows being arranged in time-series order (as can be seen from the column headed 'minutes'). Each payment data entry includes information about the payment type (as can be seen from the column headed 'payment type code', where each entry is allocated a certain payment codes), as well as information regarding the payment amounts that are being sent and/or received: the columns headed 'sAmount' and `sVolume' correspond to outgoing (sent) payments whilst the columns headed 'rAmount' and `rVolume' correspond to incoming (received) payments.

After receipt of the raw payment data, a first processing Step 410 is carried out which involves calculating the net payment amount incoming to (or outgoing from) the financial institution per minute. Calculation of this net amount involves subtracting the 'sAmount' data from the 'rAmount' data for all transactions occurring during that minute. Typically, this net amount would correspond to the net amount that would be submitted for processing to a payment engine of the financial institution in that minute.

Thereafter, a second processing Step 415 is carried out which involves aggregating the net payment amounts over a predetermined time interval in preparation for input to the predictive model. Granular data (e.g., at the minute scale or less) often exhibits volatilities over time that can result in high levels of noise and fluctuation within the data. By aggregating the data that is input to the predictive model, these fluctuations can be smoothed out (temporally) and the noise in the aggregated data can be minimised, such that true underlying (time-dependent) trends are captured without distraction from transient fluctuations. More accurate predictions can be obtained by the predictive model as a result of minimising noise in the input data.

Moreover, it will also be appreciated that the appropriate time interval to be selected for aggregation is dependent on several factors. As noted above, by aggregating the input data over longer periods of time, the data becomes more stable (temporal fluctuations are smoothed out) and the resulting data represents a more 'true', consistent state of the underlying trends. On the other hand, the total amount of data that needs to be processed during the aggregation increases with the length of time interval. This is illustrated in the table below. It is therefore useful to select a time interval that is sufficiently long such that the smoothing achieved via aggregation appropriately allows the underlying longer timescale trends in the data to be visualised. This time interval should, nevertheless, avoid overly increasing the processing burden involved.

**Table 1: Input data for aggregation over different time intervals**

| **Total observation time** | **1 min time interval** | **10 min time interval** |
|---|---|---|
| 1 hour (60 minutes) | 60 observations (1 observation/min) | 6 observations |
| 1 day (24 hours) | 24 × 60 = 1440 observations | 144 observations |
| 1 week (7 days) | 7 × 1440 = 10080 observations | 1008 observations |
| 1 month (30 days) | 30 × 1440 = 43200 observations | 4320 observations |

For example, in the specific embodiments described below, the time interval selected for aggregation is 10 minutes. this specific time interval has been found to be particularly advantageous when considering predictions / forecasts for future periods of 14 days or so. As can be seen from Table 1, the reduction in data points achieved by aggregation over a 10-minute time interval leads to a condensed data set, which improves the computational efficiency of the system. Fewer data points mean quicker computations, as well as reduced memory and storage requirements. As a result, more complex algorithms may be utilised to process the aggregated data than might have been possible with the more granular (1-minute interval) data). However, it will also be appreciated that different forecast ranges will likely require different aggregation time intervals, particularly since the underlying trends may well differ on different timescales. Proportionately longer aggregation time intervals - e.g., 15 minutes, 30 minutes, 60 minutes - could be considered if longer term forecasts are desirable.

Returning to the method 400 of Figure 4, the aggregated payment data then undergoes a further processing Step 420 to generate enhanced payment data that can be input to the predictive model. An example of this enhanced aggregated payment data is shown in **Figure 5b**. In this processing step, the aggregated payment data is enhanced by incorporating, adding or otherwise associating contextual information with the aggregated data entries. This additional contextual information includes, but is not limited to, the following features:
1. Time-Dependent Indicators: *'rolling_liquidity_7'*; *'end_of_month_avg_liquidity'*; *'avg_liquidity'*
2. Temporally-varying features: *'hour_of_day_sin'*; *'hour_of_day_cos'*; *'day_of_week'*
3. Special Dates / Times: *'is_weekend'*; *'is_Holiday', 'is_end_of_month'*
4. Predictive Proximity Indicators: *'days_to_end_of_month'; 'Proximity_to_end_of_month'*

By including this contextual information to enhance the payment data before it is input to the predictive model, the model's capability to make informed, realistic predictions (that take into consideration `real world' effects) is improved. By including a wide variety of contextual information-a combination of rolling metrics, binary indicators, temporally-varying features and proximity measures - a rich feature set is incorporated into the enhanced payment data, thereby allowing the complex task of predicting liquidity in real-time to be carried out with greater accuracy.

For example, the information relating to `Rolling liquidity' provides a historical context of the liquidity that has been required by the financial institution in the recent past. Additionally, binary features like 'is_weekend' or 'is_Holiday' allow non-continuous patterns arising from such features to be understood, and for their effects to be incorporated into the model's predictive capabilities, allowing these predictions to be better informed and tailored specifically to ensure that the features that are relevant for the predictions are appropriately applied.

The use of 'proximity indicators' (e.g., proximity to the end of the month) allows a relative measure of the effects of month-end behaviours (which, it should be appreciated, can be significantly different in terms of the level and amount of financial transactions from other times in the month) to be associated with the payment data. This also allows the predictive model to mirror the effects of real-world fluctuations more closely in financial behaviour when making its predictions.

Moreover, including cyclic (temporally varying) transformations, such as sine and cosine transformations of the day and time, allows the cyclical nature of time (and of its consequential impact on the patterns in financial behaviour) to be taken into account by the predictive model.

Thereafter, the enhanced aggregated payment data is input to the predictive model in Step 425, where the appropriate processing is carried out by a specifically designed and trained neural network architecture. A liquidity forecast prediction is obtained by the predictive model in Step 430, and a prediction of the PMFL that would be required to maintain an acceptable level of liquidity within the upcoming period of the forecast can be derived thereafter.

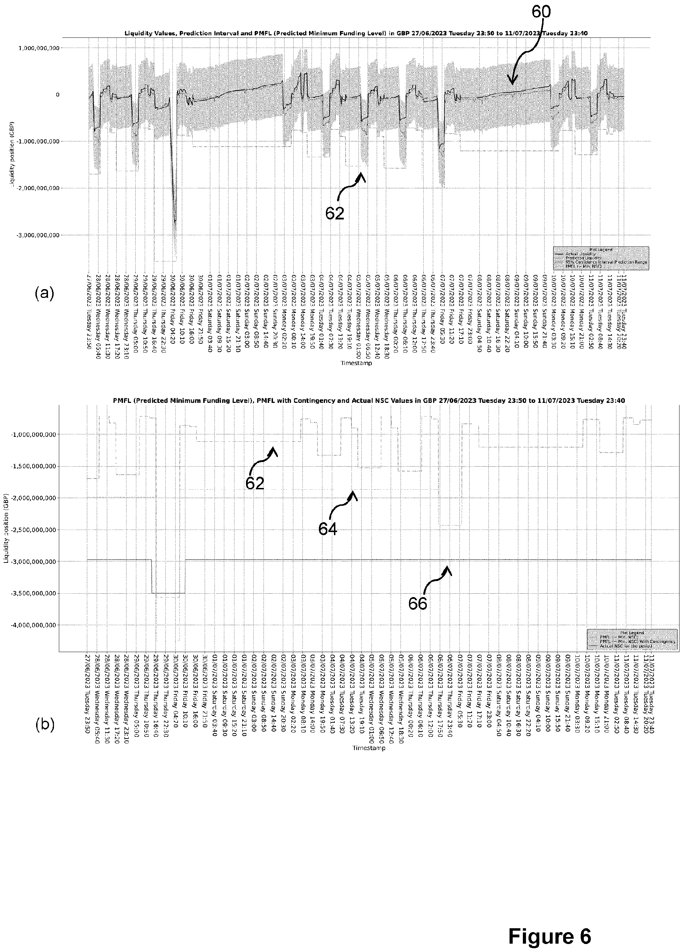

The PMFL can be determined in various different ways, however one particular implementation will now be described with reference to **Figure 6****.**

In this case, the PMFL determination is carried out initially by assessing the liquidity predictions over the forecast period (in this case, 14 days) and defining a buffer amount 60 around the liquidity predictions. For example, this buffer 60 may correspond to a particular confidence interval, such as a 95% confidence interval. This is shown as the shaded grey region on the graph in Figure 6(a). The PMFL is then defined to follow the outer (lower) boundary 62 of this confidence interval to take into account fluctuations and the local minima that could arise over the course of the forecast period. Thereafter, a further contingency 64 can also be added to the PMFL to give an even greater buffer against rare financial events that may have a big impact on liquidity. This contingency 64 could be calculated based on historic data over a predetermined period of time prior to the forecast period. The contingency 64 may also take into account what might happen in extreme circumstances, for example if the biggest net input transfer to the financial institution does not occur as expected.

**Figure 6(b)** also shows the actual liquidity levels 66 that are currently planned to be maintained by the financial institution in question over the same forecast period. The potential savings that may be achieved because of the PMFL calculated following the liquidity prediction of the present disclosure are illustrated in Figure 6(b) by the gap between actual liquidity levels 66 and the contingency-compensated PMFL levels 64 (or in some cases, the uncompensated PMFL level 62).

After a liquidity forecast prediction is obtained using the predictive model, the results of the prediction can be validated against the actual liquidity data that is obtained thereafter during that forecast period. The results of this validation can then be fed back into the predictive model and used to alter various parameters of the model, so as to improve the accuracy of the predictions made. In other words, ongoing training of the neural network architecture implementing the predictive model may be carried out via feedback in relation to the correspondence between the liquidity prediction data and the actual liquidity data.

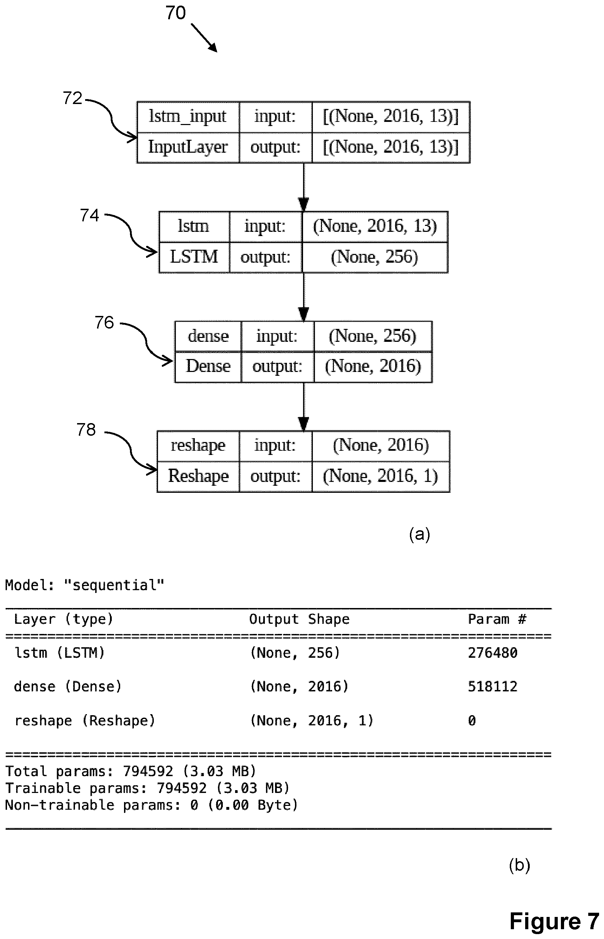

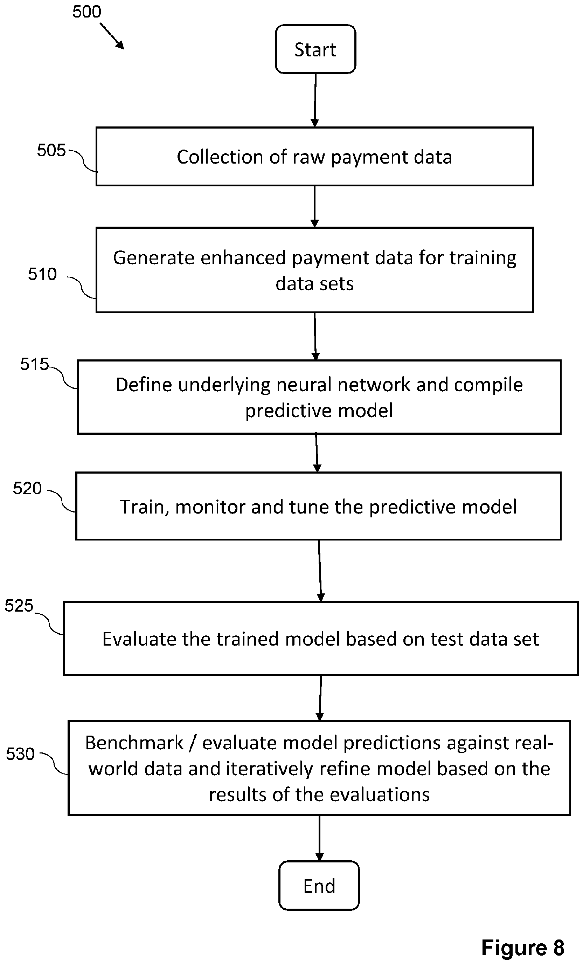

A description of the neural network architecture 70 that is used to implement the above-described predictive model, along with an example method 900 for training the neural network, will now be described with reference to **Figures 7** **and** **8****.**

As shown in **Figure 7a**, the employed neural network 70 comprises a multi-layered architecture, and at least some aspects of this architecture have been designed especially for use to analyse sequence (time-series) data. It comprises the following layers having certain associated beneficial features.

A first Input layer 72 is provided which receives the incoming enhanced payment data and readies it for processing by the subsequent layers. Next, an LSTM (Long Short-Term Memory) layer 74 is provided. Unlike traditional feed-forward networks, the LSTM layer has the capability to remember long-term dependencies and patterns over long time sequences, and to take these into account when carrying out its processing, thereby making the LSTM layer especially beneficial for time-series forecasting applications, such as the financial (liquidity) forecasting / prediction that is implemented by the systems and methods described herein. Further details of the specific LSTM layer 74 architecture, properties and parameters will now be described.

An LSTM layer typically takes in a 3D input tensor with shape (`batch size', 'timesteps', 'features'), where 'batch size' corresponds to the number of sequences in each batch; 'timesteps' corresponds to the number of time steps in each input sequence (thereby representing the length of the sequence); and 'features' corresponds to the number of features at each time step of each sequence. In the implementation envisaged in the method 400 described above, the input tensor shape to the LSTM is (64, 2016, 13) - i.e., 64 sequences per batch; 2016 time steps in each sequence; and 13 features in each time step.

The output of the LSTM layer can be configured in two main ways: 'return sequences' = 'True' or 'return sequences' = 'False'. A 'True' result will return a 3D tensor of shape (`batch size', 'timesteps', 'units'), and will therefore provide the LSTM output for *each time step for each sequence.* A `False' result will return a 2D tensor of shape ('batch size', 'units'), and will therefore provide the LSTM output only for the last time step for each sequence. In the implementation envisaged in the method 400, the LSTM layer 74 utilised comprises 256 units, thereby allowing it to capture more complex patterns in the input data than might be possible if fewer units had been used (for example, 50 units or fewer). A `False' result is also used, meaning that the output shape of the LSTM layer 74 is (64, 256).

To summarise, the LSTM layer 74 utilised herein to implement the predictive model takes sequences of 2016 timesteps, each with 13 features, and produces an output vector of size 256 for each sequence in the batch of 64. This output represents the learned representation of each sequence, which is then used subsequently for multistep forecasting.

Thereafter, a Dense layer 76 is provided. The Dense layer 76 is referred to as such because it comprises many more (2016) units than the previous layers, and is utilized to map the outputs from the LSTM layer 74 to desired future time steps. In other words, the Dense layer 76 is configured to analyse the time-series data and predict corresponding output time-series data that would be applicable at a given time in the future. Dense layers, also commonly referred to as 'fully connected layers' are known foundational elements that are used in many neural network models to perform linear operations on their inputs. As will be appreciated by the skilled person, a dense layer typically works by connecting every input neuron to every output neuron and applying weights, biases, and an activation function. The mathematical function here is a matrix multiplication, followed by an addition and an activation.

The Dense layer 76 used in the predictive model described herein has been tailored for the specific purpose of multistep forecasting. Its primary role is to reshape the output of the LSTM layer 74 to produce predictions for multiple future timesteps. More particularly, the Dense layer 76 is configured to accept the output tensor from the LSTM layer 74. As mentioned above, this is a 2D tensor of shape (64, 256), and encapsulates the information and patterns extracted by the LSTM layer 74 from the input sequence of shape (64, 2016, 13) i.e., 2016 timesteps each with 13 features. The Dense layer 76 is configured to perform a linear transformation on the input data using learned weights and biases.

The Dense layer 76 is configured to produce an output 2D tensor of shape ('batch_size', 'output steps * number of features'). In the current instance, given the LSTM layer 74 output shape of (64, 256), the output of the Dense layer 76 is of shape (64, 2016*1). In other words, a single feature (i.e., liquidity) is being predicted over multiple (2016) timesteps - corresponding to 14 days' worth of data aggregated in 10-minute timesteps. For each instance in the batch, the Dense layer 76 therefore produces a flattened array of predictions for 2016 timesteps.

The array of outputs from this Dense layer 76 are in contrast to other typical implementations of Dense layers which might produce a singular output (like in binary classification); or may produce outputs for a fixed number of classes (like in multi-class classification). Moreover, other modifications have been made to the Dense layer 76 to more specifically tailor its functionality to that desired for the implementing the predictive model described herein. For example, the Dense layer 76 is configured to begin with no learned memory initially, making the learning process more controlled and stable in the early stages of training. It is envisaged that this may be implemented by initializing the kernel for the Dense layer 76 with zeros (e.g., using 'tf.initalizers.zeros()' as the kernel initializer).

Finally, a Reshape layer 78 is provided. This also comprises 2016 units and is based on a well-established utility layer, designed primarily to change the dimensions of its input tensor without altering its data. In the current implementation, the Reshape layer 78 is configured to ready the output received from the Dense layer 76 into a format that is compatible for downstream evaluation and further processing. More specifically, the Reshape layer 78 accepts the output tensor from the Dense layer 76, which as noted above is a 2D tensor of shape (64, 2016), and performs a reshaping operation, reorganising the elements of its input tensor into a new shape without altering the underlying data (i.e., without applying any substantive mathematical computation or transformation to the tensor values). The output of the Reshape layer 78 is a 3D tensor of shape (64, 2016,1). In other words, the Reshape layer 78 simply introduces a new dimension to the tensor, segmenting the outputs from the Dense layer 76 into individual predictions for each timestep. It organizes the flattened outputs into a structured and grouped 3D tensor, making it easier to interpret and match these predicted values against ground truth values during subsequent training and evaluation.

As will be appreciated from the foregoing, the particular neural network architecture that is utilised, and particularly the combination of the different layers (and their associated functionalities), is especially beneficial for the desired liquidity prediction implementation. For example, the combination of the functionalities of the Dense layer 76 and the Reshape layer 78 allow the neural network to use the predictive model to make multistep-ahead predictions that can nevertheless still be easily evaluated once output, a challenge in many time-series forecasting tasks. Furthermore, the combination of the LSTM layer 74 with the Reshape layer 78 for multistep predictions aligns the architecture well with the demands of the underlying use-case, ensuring both depth and breadth in its forecasting ability. This is at least in part because, due to the shape and design of the Dense and Reshape layers 76, 78, the model is explicitly designed to predict multiple future time steps (e.g., 14 days), unlike conventional models which might predict just the next time point. The neural network and the predictive model implemented are therefore optimised for medium or long-term forecasting, which is particularly appropriate when considering liquidity variations with time.

Overall, the neural network and the predictive model with which it is programmed have numerous parameters that can be altered to improve / change its predictive capability (e.g., a total of 794592 parameters, across the LSTM layer 74 and the Dense layer 76). Some of the more important parameters are discussed below, along with their associated benefits.

To begin with, when implementing the predictive model in relation to the input data, the neural network is configured / programmed to utilise a stride of 1 during windowing. As a result, the model is able to generate and have access to a rich set of slightly varied training samples, thereby improving its ability to generalize from a limited initial data set. Moreover, the window size itself - i.e., the number of data points considered - determines the temporal information being captured. In this case, the window size of 2016 (corresponding to 14 days' worth of 10-minute aggregated data points) was selected based on considerations of the computing resource available. In this regard, the bigger the window size used, the more computation power would be required; and a larger window size also does not always necessarily mean better predictive power. The Applicant has discovered that for the predictive model desired to be implemented herein, the 14-day 2016 window size achieves a good performance and is also able to capture the cyclical and temporal information of the data. Smaller window sizes (such as a 1-day 144 window size or a 7-day 1008 window size) were too noisy and/or were not able to capture smoothing patterns; whereas the larger window sizes (such as a 30-day 4320 window size) were overfit on the smoothing pattern.

Additionally, in the above-described a batch size of 64 is selected for use; in other words, 64 sequences can be processed in parallel during training. The batch size affects the convergence and training speed; and smaller batch sizes can often lead to better generalization. As a result of selecting the above batch size, the predictive model is able to strike a balance between computational efficiency and accuracy - it utilises a batch size that is not too large and hence not too computationally heavy (e.g., compared with a larger batch size of 128), whilst ensuring that there are sufficient sequences to avoid being trapped in local minima during gradient descent (e.g., compared to a smaller batch size of 32). This ensures a faster yet more accurate training phase.

Furthermore, instead of using a fixed historical window when generating training data, a dynamic window and dynamic scaling are implemented. Dynamic scaling is a technique used to normalize or standardize data based on recent statistical properties. Traditional static scaling methods use fixed statistics calculated from the training dataset. By contrast, dynamic scaling updates these statistics based on a more recent data window, making it highly adaptive to recent trends and changes in the data. This is particularly useful in relation to financial data, which is often non-stationary (meaning their statistical properties change over time), and can be highly volatile with frequent shifts in patterns. Dynamic scaling ensures that the model is always trained on data that reflects the most recent distribution by continuously updating the statistical properties, enhancing its relevance and accuracy in relation to predicting future trends.

To summarise, the use of dynamic scaling enables an accurate forecast to be generated using the most relevant past information - for example, to remain adaptive to any shifts in the financial world and to consider recent trends - whilst still ensuring that the predictive model is not substantively affected by *anomalous* real-world event driven events.

For example, in some implementations, it has been discovered that data from within the most recent two-month period (immediately preceding the period that is being forecast) can be used for scaling and normalization; additionally, data from the dynamic historical window having a corresponding length to the desired forecast window is utilised. As a specific example, if a prediction / forecast for a future 14-day period is desired, the input data used by the predictive model will comprise historical data from the previous 14-day period. In this example, if the output from the model is desired to forecast liquidity for the period between 27 June 2023 to 11 July 2023, input historical data from 13 June 2023 to 27 June 2023 will be used; and the data used for the dynamic scaling will be from the two-month period immediately preceding the forecast period - i.e., from 1 April 2023 to 27 June 2023.

In conclusion, dynamic scaling is a beneficial component in handling the inherently volatile and non-stationary nature of the financial data. By embedding this technique into the system, the predictive model remains adaptable and accurate over time, consistently reflecting the most recent data characteristics.

In practical implementations of dynamic scaling, the following steps would be implemented. Firstly and prior to carrying out a training cycle, the window size to be used for scaling would be determined - two months in the above example. Thereafter, before each training cycle or epoch, the scaler would be updated based on the data from the selected window. This would involve recalculating the scaling parameters (like min, max) from the determined window. The updated scaler would then be used to normalize or standardize the training data for the current training cycle. Once the predictive model has been trained, the same dynamic scaling would be applied to incoming data when using the predictive model to carry out predictions. When the model is being trained in a batch or online learning setting where new data is continuously incorporated, dynamic scaling can be applied before each training batch or period. Where the model is retrained periodically (e.g., monthly, quarterly), the scaler would be updated based on the most recent (e.g., two months' worth of) data before each training phase.

Other important parameters used in the predictive model are described below:
1. **Number of Epochs:** This corresponds to the number of complete passes through the training dataset. Too few epochs can result in an underfit model, whereas too many can lead to overfitting. In a particular implementation, it was found that maintaining the number of epochs at 100 allowed a good balance to be struck.
2. **Optimizer:** Different optimizers can have a significant impact on the training of the model. Common choices include SGD, Adam, RMSprop, etc., with each having its own strengths and trade-offs. In a particular implementation, it was found that a suitable optimizer was Adam.
3. **Loss Function:** For a regression task, which is typical for predicting a continuous value like liquidity, loss functions such as mean squared error (MSE) or mean absolute error (MAE) are commonly used. In a particular implementation, it was found that a suitable loss function involved minimized Mean Squared Error (MSE), Moreover, it was found that calculating the loss function over the entire output sequence, and not just one or a few points, was particularly beneficial. This meant that during training, the model was penalized for inaccuracies across the entire prediction horizon, tuning it to minimize errors over the medium to long-term, rather than just the immediate future.
4. **Activation Functions:** We used the *'tanh'* for activation and state values, due to certain properties associated with the *tanh* function that make it particularly suitable for the desired implementation use case. For example, financial data like liquidity can have both positive and negative values representing different financial state like inflows and outflows of money. Unlike some other activation functions, the *tanh* function can handle negative values effectively. As a result, the negative values in the incoming data can be handle appropriately, and the predictive model can also learn the meaning of such negative values, allowing it to improve the accuracy of the predictions that are output. The *tanh* function also provides a smooth gradient which prevents issues related to the vanishing gradient problem. This is particularly beneficial when using LSTM networks where long sequences of data are processed, and maintaining a stable gradient flow is important. Furthermore, the output of the *tanh* function is centred around zero, which enables the neural networks to converge faster during training, as it more closely mirrors the behaviour of liquidity that fluctuates around a certain level. Finally, the *tanh* function produces outputs in the range of -1 to 1. This characteristic is beneficial when the features in the dataset, including liquidity, have been normalized or standardized to have this range. It ensures that the activation output is scaled similarly to the input data, leading to more stable training and performance.
5. **Sequence Length:** This corresponds to the number of timesteps the LSTM layer 74 considers for each input sequence. This needs to be optimized to capture the necessary temporal dynamics without providing too much or too little context. In a particular implementation as mentioned previously, it was found that 2016 timesteps was especially suitable for the desired predictions.
6. **Feature Scaling:** Various scaling options are available, such as a standard scaler, Quantile scaler, Uniform scaler etc. However, in a particular implementation, it was found that use of a Min-Max Scaler between (-1,1) allowed the performance to be optimised and the required liquidity predictions to be captured.

Finally, as part of the training process and depending on the period for which the forecast is desired, the weight associated with specific input features can be customised to ensure that the model performs best when it matters most and accurately reflects the changing conditions at certain periods. For example, when the forecast period is near the end of the month, the corresponding input features from the enhanced payment data like 'Proximity_to_end_of_month' can be given greater weight.

A method 500 of training a neural network implementing the predictive model as described above will now be discussed with reference to **Figure 8****.**

The method 500 begins with some 'data pre-processing' Steps 505 and 510 that are aimed at producing data that is suitable for use as training data set inputs for training the predictive model. Specifically, in Step 505, the collection and/or retrieval of raw payment data that is to serve as training data sets is carried out. This collection or retrieval of payment data may be carried out using any of the methods described previously in relation to the method 400; the format of the data collected or retrieved in this manner would also be substantially similar to that shown in Figure 5a.

Thereafter, the method 500 continues to Step 510 where the raw payment data is processed and aggregated over predefined time intervals (for example, in 10-minute intervals). The net received payment amount and the liquidity for each time interval are also calculated. In this step, the aggregated payment data is also enhanced by determining and appending additional time-series parameters, corresponding to those discussed previously in relation to Step 420. The processing carried out in Step 510 is also substantially similar to that described above in relation to Steps 410 to 420 of the method 400. As an additional step, the enhanced payment data would also be normalised prior to training, for example by applying the Min-Max Scaler (-1, 1) mentioned previously to the additional time-series parameters to bring them all to the same scale.

The method 500 then proceeds to Step 515 which involves preparing the predictive model for training and is broken down into two main processes - (a) defining the (architecture and structure of the) neural network used to implement the predictive model; and (b) compiling the predictive model itself. In relation to process (a), a framework (e.g., any known framework such as Tensorflow or PyTorch) is used to define the neural network. The neural network is structured substantially as described above - namely, with an LSTM layer 74 with 256 units followed by a Dense layer 76 and a Reshape layer 78 having the shapes described above in relation to Figure 7. The sequence length is defined - in this case, 2016 - as are the number of input and output features - in this case, 13 and 1 (liquidity) respectively. In relation to process (b), the various key parameters of the predictive model are defined - for example, the optimizer, the loss function and any additional metrics that should be monitored (and converged) during the training process.

The main training stage of the method 500 then proceeds in Step 520 where the predictive model is trained, monitored and tuned using the defined neural network architecture. This step begins by splitting the enhanced aggregated data sets created in Step 510 into three sets - a training set, a validation set and a test set - and setting various specific parameters that will be used by the model. For example, setting the following parameters: (1) sequence length for dynamic windowing - in this case, 2016; (2) stride length - in this case, 1; (3) number of epochs - in this case, 100; (4) batch size of sequences - in this case, 64. The predictive model is then trained on the training set, and validated on the validation set using various known methods (e.g. a fitting method such as .fit()). The training process is monitored (for example, using various tools built into the underlying framework), and based on the performance of the predictive model in relation to the validation set, various key parameters (hyperparameters such as batch size or epoch number) are adjusted and tuned to improve performance of the predictive model.

As a final step in the training process, the trained and validated predictive model is evaluated in Step 525 using the test data set which would not have been previously presented to the predictive model during the earlier training process. This evaluation is at least partially to assess the ability of the predictive model to generalise its predictions when presented with new data.

After initial training of the neural network in relation to the predictive model has been completed, continuous practical evaluation is regularly carried out, as illustrated in Step 530. The model's predictions are regularly compared, evaluated and benchmarked against real-world outcomes. Furthermore, the results of these evaluations are used to iteratively refine the predictive model in Step 530. As a result, the model's predictive accuracy can continue to be refined and optimised over time.

In other words, an ongoing feedback loop can be established in relation to the predictive model, where model predictions are consistently benchmarked and refined. This can be done over any given predetermined time interval (e.g., monthly, or quarterly) and results in the ability to provide more accurate predictions, as compared with a one-time training process.

In summary, the predictive model implemented hereinabove is optimized for medium and long-term forecasting because of various architectural choices. To begin with, because of the specific layers that are used in the predictive model, it is designed with a sequence-to-sequence approach where it takes a sequence of data points as input and predict a sequence of future data points. More particularly, the combination of Dense and Reshape layers means that the outputs are reshaped to match the required forecast horizon. This means the predictive model is explicitly structured to output predictions for multiple future timesteps in a single forward pass, which is particularly suitable for medium to long-term forecasting. Use of aggregated data means that the predictive model is trained to smooth out short-term fluctuations and focus on more significant trends and patterns that play out over multiple days or weeks.

Taking into account time-series features during training, particularly those that have effects spanning multiple days or weeks (e.g., rolling liquidity or proximity to the end of the month), or those that include cyclical time encoding (e.g., sine and cosine of time), also provide beneficial effects. As a result of the former, the predictive model is trained to incorporate longer-term cycles into its predictions; due to the latter, the predictive model learns to grasp long term cyclical trends and seasonality, which is important for forecasting over longer periods.

Finally, by training the model on historical data to predict multiple future timesteps at once, rather than just the next step, the parameters of the model are optimized for patterns that unfold over longer-term sequences, rather than optimizing for immediate next-step predictions.

As the skilled person will appreciate, the embodiments described above are exemplary, and further embodiments falling within the spirit and scope of the disclosure may be developed by the skilled person working from the principles and examples set out above.

## Claims

1. A computer implemented method for predicting a level of a time-varying reserve stored by a financial institution, the method comprising:
obtaining a raw time-series transaction data set comprising a plurality of pieces of transaction data, each piece of transaction data corresponding to a transaction carried out by the financial institution over a previous time period;
generating an enhanced time-series transaction data set by associating a plurality of time-series variables with each piece of transaction data in the raw transaction data set;
providing the enhanced transaction data set to a predictive model trained using a machine learning method, wherein the predictive model comprises at least two layers, a first time-series layer configured to capture time-series nature of the enhanced transaction data set and a second dense layer configured to map outputs from the first time-series layer to predicted time-series data over a future time period; and
receiving, from the predictive model as output, a prediction of the level of the time-varying reserve for the future time period.

2. The method of claim 1, further comprising aggregating the raw transaction data set over predefined time intervals and generating the enhanced time-series transaction data set using the aggregated transaction data set and the plurality of time-series variables.

3. The method of claim 2, wherein the predefined time intervals are 10-minute time intervals and/or the future time period corresponds to a 14 day time period.

4. The method of any preceding claim, wherein the first time-series layer of the predictive model is a Long Short-Term Memory LSTM model.

5. The method of any preceding claim, wherein the plurality of time-series variables comprises at least one cyclic transformation of one or more time-related features associated with each of the pieces of transaction data in the raw transaction data set.

6. The method of claim 5, wherein:
the at least one cyclic transformation comprises a sine transformation or a cosine transformation; and
the one or more time-related features are selected from a group comprising: a time of day at which the transaction was carried out; a day of the week on which the transaction was carried out; and a date on which the transaction was carried out.

7. The method of any preceding claim wherein the plurality of time-series variables comprises at least one representation of a cyclically occurring event, the event being selected from the group comprising: occurrence of a holiday; occurrence of a weekend; or occurrence of month-end.

8. The method of any preceding claim wherein the plurality of time-series variables comprises one or more metrics relating to the level of the time-varying reserve, and/or one or more indicators associated with the proximity of the transaction date to month-end.

9. The method of any preceding claim, further comprising:
determining the actual amount of the reserve required by the financial institution for the future time period;
comparing the output prediction of the level of the reserve for the future time period with the determined actual amount of reserve required; and
providing the results of the comparison as feedback input to the predictive model to improve predictive capabilities of the model.

10. The method of any preceding claim, further comprising providing, to the predictive model, a set of scaling data corresponding to transactions carried out over a dynamically variable scaling time period that includes at least the previous time period.

11. The method of any preceding claim wherein the predictive model further comprises a third, reshaping, layer configured to process the data output from the second layer into a format compatible for further processing and evaluation.

12. A computer implemented method for training a predictive model, using a machine learning process, to predict a level of a time-varying reserve stored by a financial institution, the method comprising:
obtaining a raw time-series transaction data set comprising a plurality of pieces of transaction data, each piece of transaction data corresponding to a transaction carried out by the financial institution in a previous time period;
generating an enhanced time-series transaction data set by associating a plurality of time-series variables with each piece of transaction data in the raw transaction data set; and
training a predictive model by:
providing a first subset of the enhanced transaction data set as training data to the predictive model, the predictive model comprising at least two layers, a first time-series layer configured to capture time-series nature of the enhanced transaction data set and a second dense layer configured to map outputs from the first time-series layer to predicted time-series data over a future time period;
receiving, from the predictive model as output, a first prediction of the level of the reserve for a future time period;
validating the predictive model by providing a second subset of the enhanced transaction data set as validation data to the predictive model and receiving a second prediction of the level of the reserve for the future time period; and
tuning one or more parameters of the predictive model based on the first and second predictions.

13. The computer implemented method of claim 12 further comprising:
benchmarking an output prediction level of the reserve against an actual amount of reserve required for the future time period; and
using the results of the benchmarking as feedback input to the predictive model; and
training the predictive model by tuning the one or more parameters of the predictive model based on the feedback input.

14. The method of claim 12 or claim 13 further comprising providing, to the predictive model, a set of scaling data corresponding to transactions carried out over a dynamically variable scaling time period that includes at least the previous time period.

15. A computing system for predicting a level of a time-varying reserve stored by a financial institution, the computing system comprising:
an input configured to receive a raw time-series transaction data set comprising a plurality of pieces of transaction data, each piece of transaction data corresponding to a transaction carried out by the financial institution over a previous time period;
at least one processor programmed with instructions that when implemented cause the processor to:
generate an enhanced time-series transaction data set by associating a plurality of time-series variables with each piece of transaction data in the raw transaction data set;
provide the enhanced transaction data to a predictive model trained using a machine learning method, wherein the predictive model comprises at least two layers, a first time-series layer configured to capture time-series nature of the enhanced transaction data and a second dense layer configured to map outputs from the first time-series layer to predicted time-series data over a future time period; and
receive, from the predictive model as output, a prediction of the level of the reserve for a future time period; and
the computing system further comprising an output configured to output the prediction of the level of the reserve.
